# EUROPEAN PATENT SPECIFICATION

(11) **EP 3 788 433 B1**
(45) Date of publication and mention of the grant of the patent: **12.03.2025**
(21) Application number: 19759109.2
(22) Date of filing: 02.08.2019
(51) Int. Cl.: G02B 27/01, G02B 17/08, G02B 27/14

(54) **OPTICAL DEVICE AND HEAD MOUNTED DISPLAY**
OPTISCHE VORRICHTUNG UND KOPFMONTIERTE ANZEIGE
DISPOSITIF OPTIQUE ET VISIOCASQUE

(30) Priority: 02.08.2018 US 201816053297
(43) Date of publication of application: 10.03.2021
(73) Proprietor: Google LLC, Mountain View, CA 94043 (US)
(72) Inventor: MARTINEZ, Oscar, Mountain View, California 94043 (US); QIN, Yi, Mountain View, California 94043 (US); HU, Xinda, Mountain View, California 94043 (US)
(74) Representative: Maikowski & Ninnemann Patentanwälte Partnerschaft mbB
(86) International application number: PCT/US2019/044996
(87) International publication number: WO 2020/028869

(56) References cited:
- WO-A1-96/06378
- WO-A1-96/06378
- US-A1- 2015 378 074
- US-A1- 2015 378 074
- US-A1- 2017 176 751
- US-A1- 2017 176 751
- US-A1- 2017 255 015
- US-A1- 2017 255 015

## Description

### BACKGROUND

One approach for fabricating a head mounted display (HMD) is to use a curved mirror in combination with a partially reflective material. This combination yields a short focal length and a wide field of view for a wearer of the HMD. A partially transparent HMD allows the wearer to contemporaneously view a displayed image and the scene in front of the wearer. In different modes of operation, the see-through HMD presents the displayed image so that the area of the displayed image is transparent, semi-transparent, or opaque. In the transparent mode, the see-through view of the scene is unblocked, and an overlaid displayed image can be provided with low contrast. In the semitransparent mode, the see-through view of the scene is partially blocked, and an overlaid displayed image can be provided with higher contrast. In the opaque mode, the see-through view of the scene is fully blocked, and an overlaid displayed image can be provided with high contrast.

Some implementations of an HMD provide a see-through display for an augmented reality view in which real-world scenes are visible to a user and additional image information is overlaid thereon. Such an augmented reality view is provided by helmet mounted see-through displays found in military applications and by heads-up displays (HUDs) in windshields of automobiles. In such embodiments, there can be multiple areas for displaying images over the see-through view.

US 2017/176751 A1, WO 96/06378 A1, US 2017/255015 A1, and US 2015/378074 A1 disclose prior art HMDs using polarization optics.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a simplified diagram of a side view of a catadioptric head mounted display (HMD) in accordance with various embodiments.
FIG. 2 is an overhead cross-sectional view along line 1-1 of the catadioptric HMD shown in FIG. 1.
FIGs. 3-4 are diagrams of side views of arrangements of elements of catadioptric HMDs.
FIG. 5 is an exploded diagram of elements of portions of a catadioptric device in accordance with various embodiments.
FIG. 6 is a flowchart illustrating a method of providing light to a user by way of a catadioptric device in accordance with various embodiments.

### DETAILED DESCRIPTION

The invention is defined by the appended claims. Catadioptric systems employ both refraction and reflection to provide certain benefits including building a lighter head mounted display (HMD). Catadioptric HMDs provide a wide field of view (FOV) for a wearer. Described herein are embodiments of optical devices which may be part of a catadioptric HMDs that combine at least one small electronic display with two optical elements: a polarizing filter and a combiner. The combiner is also known as a reflector. Some embodiments use a freeform partially reflective shell as the reflector, and a reflective circular polarizer as the polarizing filter. The reflector is curved along one or more axes of orientation with respect to an eye of a wearer. A curved reflector shapes or directs a resulting image to an eye pupil. According to certain embodiments, the image is formed from visible light energy. One or more of the elements are freeform where freeform as used herein means at least that a curvature in a surface is without a rotational symmetry or is rotationally asymmetric. For example, a surface of the polarizer or a surface of the reflector does not have a rotational symmetry along one directional axis or along two directional axes. According to some embodiments, the components do not share a same optical axis. For example, a first optical axis of the polarizing filter is offset or not aligned with a second optical axis of the freeform partially reflective reflector.

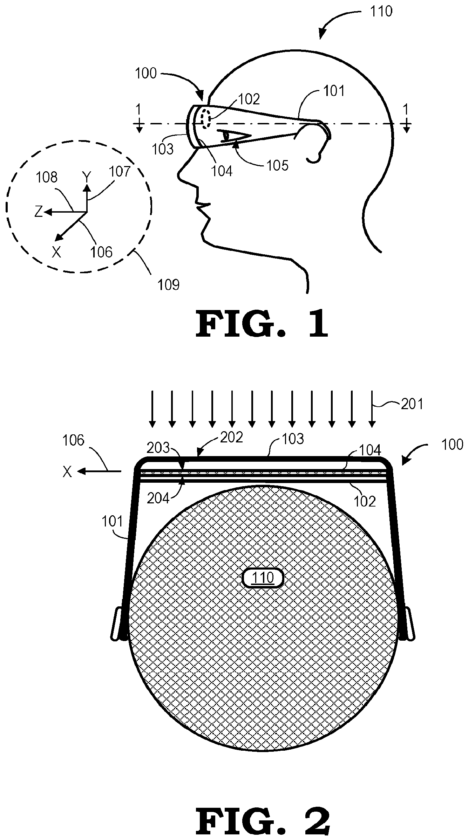

The reflective circular polarizer eliminates a use of or a need for total internal reflection (TIR). Circular polarization as described herein means at least an electromagnetic wave having a polarization in which, at each point, an electric field of the wave has a constant magnitude and its direction rotates with time in a plane perpendicular to the direction of the wave. This arrangement allows the optical components to be thin shells (e.g., <1.0 mm, <1.5 mm, and <2.0 mm), and does not require a compensating prism for augmented reality (AR) as required in a conventional freeform prism architecture when a see-through outer shell is used to allow ambient light to enter the device. Further, only a single polarizing filter is needed to manage the polarization states throughout the light path. The combination of the elements facilitates virtual reality (VR) and AR vision for the wearer. FIGS. 1-6 illustrate aspects of the optical architecture further described herein.

Avoiding the use of thick freeform prisms reduces weight, improves aesthetics, and eliminates chromatic aberrations. A result is sleeker and lighter optics for an improved form-factor which is more likely to be adopted by consumers. Some embodiments include use of just two thin shells as opposed to thick prisms of conventional designs. It is possible to use either a single or double reflection from the combiner which can be a freeform combiner.

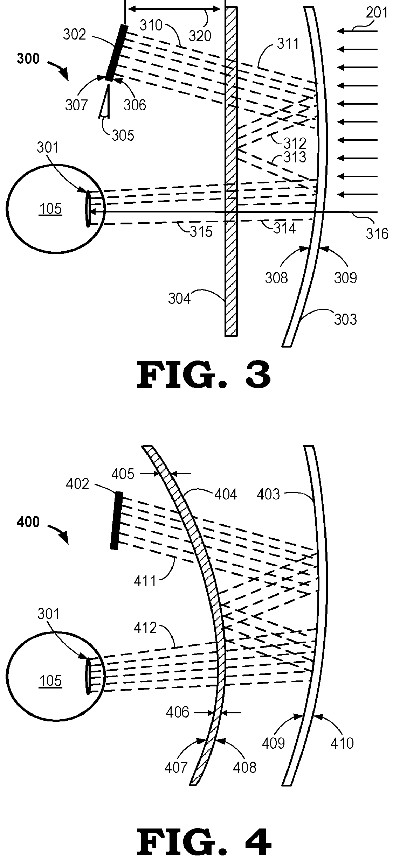

FIG. 1 is a simplified diagram of a side view of a catadioptric HMD in accordance with various embodiments. Each of the elements of the HMD 100 takes the form of one of various possible embodiments as further described herein. The HMD 100 includes a frame 101 that supports at least one electronic display 102 that produces unpolarized light for one or both user eyes 105 of a user 110. The frame 101 includes one or more arms that extend from a front of the user 110 and rest on one or more ears on a side of the user's head. According to at least some embodiments, a portion of the frame 101 rests on a bridge of a nose of the user 110. A combiner or reflector 103 is positioned outside of a polarization filter 104. The polarization filter 104 is in a light path (within the HMD 100) between the electronic display 102 and an expected position of one or both user eyes 105 (see, e.g., also FIG. 3). As shown, the polarization filter 104 is on an eye-ward side of the reflector 103 and on a world-facing side of the display 102. An 'eye-ward side' may generally relate to a side which faces an eye of a user wearing a device, such as the HMD 100, including a proposed optical device, whereas a 'world-facing side' may generally relate to a side facing away from an eye of a user. Accordingly, the polarization filter 104 may in particular be arranged between the reflector 103 and the display 102. The reflector 103 reflects at least a portion of light from the electronic display to one or both user eyes 105.

A vision and device coordinate system 109 provides a reference for FIG. 1 and the other figures described herein. According to some embodiments, each of the reflector 103 and the polarization filter 104 are curved along at least one of a first axis or dimension 106 labeled X and along a second axis 107 labeled Y, the second axis 107 different than the first directional axis 106. A curvature along the first axis 106 may be referred to as a horizontal arc along a certain number of degrees of azimuth with respect to the HMD 100 and the user 110. A curvature along the second axis 107 may be referred to as a vertical arc along a certain number of degrees of altitude with respect to the HMD 100 and the user 110. A third axis 108 is labeled Z and is an optical axis relative to the user's eyes 105 and for the optical elements of the HMD 100.

FIG. 2 is an overhead cross-sectional view along line 1-1 of the catadioptric HMD 100 shown in FIG. 1. Ambient light 201 passes through a front surface 202 of the reflector 103 and through the polarization filter 104 to reach the eyes of the user 110. The frame 101 supports the electronic display 102, the reflector 103, and the polarization filter 104. The polarization filter 104 includes a front surface 203 and a back surface 204. According to the embodiment shown, each of the reflector 103 and the polarization filter 104 is substantially planar along a first axis 106.

FIG. 3 is a diagram of a side view of an arrangement 300 of elements of a catadioptric HMD not in accordance with the present invention. Support elements are omitted for clarity of illustration and are present in assembled HMDs as understood by those in the art. A pupil 301 of a user eye 105 is behind a partially reflective reflector 303 and a partially reflective polarization filter 304.

The reflector 303 includes a first interior or eye-facing surface 308 and an exterior or world-facing surface 309. While the reflector 303 is shown as a single material, the reflector 303 comprises one or more layers of one or more various materials. For example, the reflector 303 takes the form of a freeform thin shell that includes a partial mirror coating on a substrate such as on the eye-facing surface 308 and an anti-reflecting coating on the substrate on the world-facing surface 309. The polarization filter 304 also is shown as a single material. However, the polarization filter 304 comprises one or more layers of one or more various materials according to various embodiments. For example, the filter 304 includes a planar substrate, a linear polarizer, a linearly polarizing reflective film, and a quarter-wave retarder film.

The eye 105 receives light emitted from an electronic display 302 after it has traveled along a light path within the HMD. The filter 304 generates circular polarized light from the display 302. The filter 304 reflects orthogonal circular polarized light after the light reflects a first time from the reflector 303. The filter 304 transmits circular polarized light after the light reflects a second time from the reflector 303.

According to some embodiments, the eye 105 also receives light from an ambient outside of the catadioptric HMD. According to some embodiments, the display 302 is oriented at an angle 305 relative to an axis of the substantially planar partially reflective polarization filter 304. In other embodiments, the display 302 is placed parallel or contiguous with a proximate surface of the partially reflective polarization filter 304. Preferably, light 310 emanates from a front or first side or surface 306 of the electronic display 302 and not from a back or second side 307 of the electronic display 302.

The display 302 is shown as substantially planar at least along a first surface 306. The display 302 includes a second or back surface 307. The display 302 is either substantially planar, or contoured or curved, depending on the particular embodiment. The display 302 is shown and assembled in the HMD a distance 320 from an interior surface of the polarization filter 304. However, the display 302 may be mounted to or formed directly contiguous with the polarization filter 304. An actual construction of the display 302 uses organic light emitting diodes (OLED), light emitting diodes (LED), or any other suitable material or combination of elements to produce a plurality of light emitting sources which are arranged on a substantially locally continuous surface such as an edge-illuminated element and a liquid crystal display (LCD). According to some embodiments, the display 302 provides a rectangular array of light emitting elements. According to some embodiments, the display 302 is transparent or semi-transparent and that transparency can be either an overall general passing of light or take a form of a dot type beam splitter where there are small non-transparent elements on a largely transparent substrate so that the overall effect is that the display allows light to pass through it.

In line with to the present invention, a surface of the display 302 is shaped to fit a contour of at least a portion of the interior surface of the partially reflective polarization filter 304. According to certain embodiments, the angle 305 of the orientation of the display 302 is coordinated with a contour or curvature of the reflector 303 so as to shape a size and orientation of an image reaching the pupil 301 when reflected from one or more surfaces of the reflector 303 and from one or more surfaces of the polarization filter 304. Any curvature in the display 302, along one or two axes of orientation is coordinated with curvature in one or more axes of curvature of the reflector 303 and coordinated with curvature in one or more surfaces of the polarization filter 304. The polarization filter 304 is shown substantially planar in FIG. 3. According to various embodiments, the curvature in one or more of the reflector 303 and the polarization filter 304 is any suitable curved element that has a spherical or aspherical or compound shape and a uniform or non-uniform thickness as needed to shape the image of light reaching the pupil 301 of the eye 105 from the display 302. However, according to the present invention, the reflector and the polarization filter are formed as specified in the appended set of claims.

A portion 316 of the ambient light 201 passes through the partially reflective reflector 303 and the partially reflective polarization filter 304 to reach the user eye 105. Light 310 emanating from the display 302 is unpolarized. According to some embodiments, light 311 that first passes through the partially reflective polarization filter 304 is left-handed circular-polarized light 311. Upon reflection from the partially reflective reflector 303, the light become right-handed circular polarized light 312. Light 313 that has been reflected a first time from the partially reflective polarization filter 304 remains right-handed circular-polarized. Upon a second reflection from the partially reflective reflector 303, light 314 again becomes left-handed circular polarized light 314 and is converted to linearly polarized light 315 after passing through the partially reflective polarization filter 304. At each element 303, 304, a portion of the light 310 is either reflected or transmitted. Consequently, not all light leaving the electronic display 302 reaches the eye 105 of the user.

FIG. 4 is a diagram of a side view of an arrangement 400 of elements of a catadioptric HMD in accordance with additional embodiments. A pupil 301 of a user eye 105 is behind a curved partially reflective reflector 403 and a curved partially reflective polarization filter 404. The reflective polarization filter 404 includes a first inner surface 407 that is concave in contour along at least one directional axis and a second outer surface 408 that is convex. The filter 404 is of a first thickness 405 at a first position and of a second thickness 406 at a second position. According to some embodiments, the filter 404 is a uniform thickness along the body of the filter 404 at least at positions along the light path of light provided by a display 402. The light path extends between the display 402 and the user eye 105. According to some embodiments, light 411 leaves the display 402 in a non-polarized state and, after passing through the filter 404, becomes polarized light 412. Only a fraction of the light 411 leaving the display 402 arrives at the pupil 301 of the user eye 105 due to the elements of the HMD.

The reflector 403 includes a first interior concave surface 409 and an exterior convex surface 410. According to some embodiments, the eye 105 also receives ambient light from an ambient outside of the catadioptric HMD but is not shown for sake of simplicity in illustration. In the arrangement 400 shown, light from the display 402 is reflected at least two times from the partially reflective reflector 403 and at least one time from the filter 404 before reaching the user eye 105. An outer surface 408 of the filter 404 is positioned relative to the inner surface 409 of the reflector 403 in the assembled HMD to provide light from the display 402 to the user eye 105. An orientation, a position, or both an orientation and a position of the display 402, relative to the other elements, are selected for the HMD. A shape, a position, or both a shape and an orientation of the filter 404, relative to the other elements, are selected for the HMD. Also, a shape, a position, or both a shape and an orientation of the reflector 403, relative to the other elements, are selected for the HMD. These features are arranged together to shape a resulting image generated by the light originating from the display 402 to the user eye 105.

While the reflector 403 is shown as a single material in FIG. 4, the reflector 403 comprises one or more layers of one or more various materials. For example, the combiner or reflector 403 takes the form of a freeform thin shell that includes a partial mirror coating on a substrate such as on the eye-facing surface 409 of the substrate and an anti-reflection coating on the world-facing surface 410 of the substrate. Freeform for the reflector 403 refers to a curvature or contour along a first axis or orientation, a curvature or contour along a second axis or orientation, or along both the first and the second axes.

The polarization filter 404 also is shown as a single material in FIG. 4. However, the polarization filter 404 comprises one or more layers of one or more various materials according to various embodiments. For example, the filter 404 includes a curved or contoured base substrate such as a plastic or glass layer, a linear polarizer, a linearly polarizing reflective film, and a quarter-wave retarder film. The filter 404 generates circular polarized light from the display 402. The filter 404 reflects orthogonal circular polarized light after a first reflection from the reflector 403 and transmits circular polarized light after a second reflection from the reflector 403. The filter 404 is shown curved along a first directional axis. The filter 404 may be curved along a second directional axis to conform with the shape of a user's head. The filter 404 is a freeform surface. Freeform for the filter 404 as used herein includes a curved or contoured surface without a rotational symmetry along at least one or first axis or orientation of the filter 404 surface. The curvature also may be along a second axis or orientation of the filter 404.

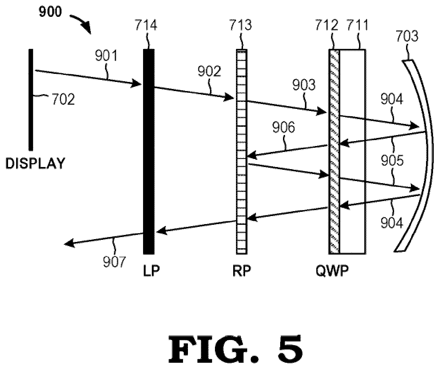

FIG. 5 is an exploded diagram of elements of portions of a catadioptric device in accordance with various embodiments. A display such as display 702 emits unpolarized light 901 toward a linear polarizer (LP) 714. The display 702 may be rectangular in shape and may have a first dimension and a second dimension which is orthogonal to the first dimension. For example, the first dimension is approximately 22 mm and the second dimension is approximately 36 mm. Linearly polarized light 902 passes to and through a reflective polarizer (RP) 713.

Linearly polarized light 903 from the RP 713 passes to and through a quarter-wave plate (QWP) 712 and a glass substrate 711 thereby becoming circularly polarized (CP) light 904. The CP light 904 is reflected from a curved partially reflective reflector 703 which changes its handedness. For example, for left-handed circularized light 904, the first reflected light 905 becomes right-handed circularized light. The first reflected light 905 passes through the glass substrate 711 and the QWP 712 and thereby becomes phase-shifted light 906. Such light is linear and orthogonal to the linear transmission polarization state such as that of a reflective polarizer such as polarizer 713 and with respect to a linear polarizer such as LP 714. The phase-shifted light 906 then is reflected by the RP 713 back through the QWP 712 and the glass substrate 711. At this point, the light is right-handed circularized light 905. The light 905 is reflected a second time by the curved partially reflective reflector 703. The handedness is again reversed back to left-handed circularized light 904. The third-reflected light passes through the glass substrate 711, the QWP 712, the RP 713, and the LP 714 and is thereby shaped light 907 capable of being observed by or directed into a pupil of a human eye (not shown) as part of an image made by light 901 emitted from the display 702. The arrangement 900 can take many forms including an HMD or other form of headgear, a head mounted device, a head mounted screen, a wearable device, a VR headset, an AR or VR visor, a set of virtual reality glasses, or electronically enhanced eyewear. Alternatively, the arrangement can be part of a heads-up display (HUD). The display 702 can take one of several forms including an electronic image source, an electronic screen, an LED panel, an OLED panel, and an LCD panel.

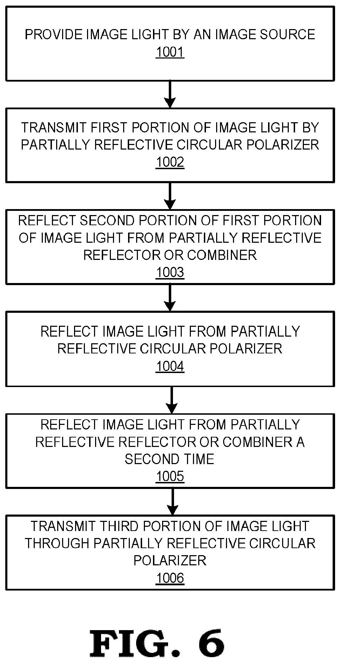

FIG. 6 is a flowchart illustrating a method of providing light to a user by way of a catadioptric device in accordance with certain illustrative embodiments. At 1001, image light is provided by an image source. At 1002, a first portion of the image light is transmitted through a partially reflective circular polarizing filter. The partially reflective circular polarizing filter may be a combination of elements. At 1003, a second portion of the first portion of image light is reflected from a partially reflective reflector or combiner such as reflector 703. At 1004, at least a portion of the second portion of light is reflected from the partially reflective circular polarizing filter or polarizer. At 1005, image light is reflected a second time by the partially reflective reflector or combiner. At 1006, a third portion of image light is transmitted through the partially reflective circular polarizer to reach a user eye. For example, such light is the linearly polarized light 315 of FIG. 3.

In some embodiments, certain aspects of the techniques described above may implemented by one or more processors of a processing system executing software such as to provide power to and control of elements in an electronic display for producing light to reach one or more user's eyes. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. An optical device comprising:
a reflector (103, 303, 403, 503, 603, 703, 810, 811) being curved along a first directional axis (106) and being rotationally asymmetric along the first directional axis;
a partially reflective circular polarizer (104, 404, 604), for selecting polarized light, positioned between the reflector and an expected position of a first user eye (105) and curved along the first directional axis; and
an electronic display (302, 402, 502, 602, 702, 808), configured to provide light to the first user eye, positioned at an eye-ward side of the partially reflective circular polarizer and curved to fit a contour of the eye-ward side of the partially reflective circular polarizer.

2. The optical device of claim 1, wherein an optical axis of the reflector is offset from an optical axis of the polarizer and/or the reflector is partially reflective.

3. The optical device of claim 1 or 2, further comprising:
a frame (101) shaped to rest against a portion of an anatomical structure of a user, the frame supporting the electronic display, the polarizer, and the reflector.

4. The optical device of claim 1, wherein
• the reflector is curved along a second directional axis (107) and is rotationally asymmetric along the second directional axis; or
• the partially reflective circular polarizer is curved along a second directional axis different than the first directional axis; or
• the reflector and the partially reflective circular polarizer are both rotationally asymmetric along the first directional axis.

5. The optical device of any one of the preceding claims, wherein the partially reflective circular polarizer reflects orthogonal circular polarization after a first reflection of light energy from the reflector.

6. The optical device of claim 5, wherein the partially reflective circular polarizer transmits orthogonal circular polarization after a second reflection of light energy from the reflector.

7. The optical device of any one of the preceding claims, wherein the electronic display (702, 808) is fabricated with and coupled to the partially reflective circular polarizer (704).

8. The optical device of any one of the preceding claims, wherein the partially reflective circular polarizer comprises:
a quarter-wave plate, QWP (712);
a reflective polarizer layer (713); and
a linear polarizer (714).

9. The optical device of claim 8, wherein the partially reflective circular polarizer further comprises:
a supportive substrate (711) made of at least one of a glass or a plastic; and
an anti-reflective film (715).

10. The optical device of any one of the preceding claims, wherein
• the reflector comprises:
a mirror coating on the eye-ward surface of the reflector; or
anti-reflection coating on a world-facing surface of the reflector;
and/or
• the reflector and the partially reflective circular polarizer are configured to extend in front of the first user eye and a second user eye;
and/or
• the electronic display is a first electronic display positioned to provide light to the first user eye (105) by reflection from the reflector (810), the optical device further comprising a second electronic display positioned to provide light to a second user eye (806) by reflection from another reflector (811).

11. A head mounted display, HMD, apparatus comprising an optical device of claim 1.

12. The HMD apparatus of claim 11, wherein the HMD comprises a polarization filter at an output of the partially reflective circular polarizer, wherein, optionally, the polarization filter is laminated directly on the display, and wherein the polarization filter comprises a linear polarizer (714) and a quarter-wave retarder film.

13. A method for viewing imagery with a head mounted display, HMD, the method comprising:
providing image light by an electronic display (302, 402, 502, 602, 702, 808);
reflecting a first portion of the image light by a partially reflective circular polarizer (104, 404, 604) of the HMD, wherein the partially reflective circular polarizer is curved along the first directional axis and the electronic display is curved to fit a contour of an eye-ward side of the partially reflective circular polarizer;
reflecting a second portion of the first portion of the image light from a reflector (103, 303, 403, 503, 603, 703, 810, 811) of the HMD, the reflector being at least partially reflective, being curved along the first directional axis and being rotationally asymmetric along the first directional axis; and
transmitting a third portion the image light, the third portion linearly polarized by passing through the partially reflective circular polarizer to a user eye (105).

## Patentansprüche

1. Optische Vorrichtung, umfassend:
einen Reflektor (103, 303, 403, 503, 603, 703, 810, 811), der entlang einer ersten Richtungsachse (106) gekrümmt und entlang der ersten Richtungsachse rotationsasymmetrisch ist;
einen teilreflektierenden Zirkularpolarisator (104, 404, 604) zum Auswählen von polarisiertem Licht, der zwischen dem Reflektor und einer erwarteten Position eines ersten Benutzerauges (105) positioniert und entlang der ersten Richtungsachse gekrümmt ist; und
eine elektronische Anzeige (302, 402, 502, 602, 702, 808), die dazu konfiguriert ist, Licht für das erste Benutzerauge bereitzustellen, auf einer augenseitigen Seite des teilreflektierenden Zirkularpolarisators positioniert ist und in Anpassung an eine Kontur der augenseitigen Seite des teilreflektierenden Zirkularpolarisators gekrümmt ist.

2. Optische Vorrichtung nach Anspruch 1, wobei eine optische Achse des Reflektors gegenüber einer optischen Achse des Polarisators versetzt ist und/oder der Reflektor teilreflektierend ist.

3. Optische Vorrichtung nach Anspruch 1 oder 2, ferner umfassend:
einen Rahmen, der so geformt ist, dass er an einem Abschnitt einer anatomischen Struktur eines Benutzers anliegt, wobei der Rahmen die elektronische Anzeige, den Polarisator und den Reflektor trägt.

4. Optische Vorrichtung nach Anspruch 1, wobei
der Reflektor entlang einer zweiten Richtungsachse (107) gekrümmt ist und entlang der zweiten Richtungsachse rotationsasymmetrisch ist; oder
der teilreflektierende Zirkularpolarisator entlang einer zweiten Richtungsachse gekrümmt ist, die von der ersten Richtungsachse verschieden ist; oder
der Reflektor und der teilreflektierende Zirkularpolarisator beide entlang der ersten Richtungsachse rotationsasymmetrisch sind.

5. Optische Vorrichtung nach einem der vorhergehenden Ansprüche, wobei der teilreflektierende Zirkularpolarisator nach einer ersten Reflexion von Lichtenergie von dem Reflektor eine orthogonale Zirkularpolarisation reflektiert.

6. Optische Vorrichtung nach Anspruch 5, wobei der teilreflektierende Zirkularpolarisator nach einer zweiten Reflexion von Lichtenergie von dem Reflektor eine orthogonale Zirkularpolarisation überträgt.

7. Optische Vorrichtung nach einem der vorhergehenden Ansprüche, wobei die elektronische Anzeige (702, 808) mit dem teilreflektierenden Zirkularpolarisator (704) gefertigt und an diesen gekoppelt ist.

8. Optische Vorrichtung nach einem der vorhergehenden Ansprüche, wobei der teilreflektierende Zirkularpolarisator umfasst:
einer Viertelwellenplatte, QWP (712);
eine reflektierende Polarisatorschicht (713); und
einen Linearpolarisator (714).

9. Optische Vorrichtung nach Anspruch 8, wobei der teilreflektierende Zirkularpolarisator ferner umfasst:
ein Trägersubstrat (711), das aus mindestens einem von einem Glas oder einem Kunststoff hergestellt ist; und
eine entspiegelte Folie (715).

10. Optische Vorrichtung nach einem der vorhergehenden Ansprüche, wobei
der Reflektor umfasst:
eine Spiegelbeschichtung auf der augenseitigen Oberfläche des Reflektors; oder
Antireflexionsbeschichtung auf einer der Welt zugewandten Oberfläche des Reflektors;
und/oder
der Reflektor und der teilreflektierende Zirkularpolarisator dazu konfiguriert sind, sich vor dem ersten Benutzerauge und einem zweiten Benutzerauge zu erstrecken;
und/oder
die elektronische Anzeige eine erste elektronische Anzeige ist, die positioniert ist, um Licht an das erste Benutzerauge (105) durch Reflexion von dem Reflektor (810) bereitzustellen, wobei die optische Vorrichtung ferner eine zweite elektronische Anzeige umfasst, die positioniert ist, um Licht an ein zweites Benutzerauge (806) durch Reflexion von einem anderen Reflektor (811) bereitzustellen.

11. Kopfmontierte Anzeige-, HMD-, Einrichtung, umfassend eine optische Vorrichtung nach Anspruch 1.

12. HMD-Einrichtung nach Anspruch 11, wobei die HMD ein Polarisationsfilter an einem Ausgang des teilreflektierenden Zirkularpolarisators umfasst, wobei optional das Polarisationsfilter direkt auf die Anzeige laminiert ist und wobei das Polarisationsfilter einen Linearpolarisator (714) und eine Viertelwellenverzögerungsfolie umfasst.

13. Verfahren zum Betrachten von Bildern mit einer kopfmontierten Anzeige, HMD, wobei das Verfahren umfasst:
Bereitstellen von Bildlicht durch eine elektronische Anzeige (302, 402, 502, 602, 702, 808);
Reflektieren eines ersten Teils des Bildlichts durch einen teilreflektierenden Zirkularpolarisator (104, 404, 604) der HMD, wobei der teilreflektierende Zirkularpolarisator entlang der ersten Richtungsachse gekrümmt ist und die elektronische Anzeige in Anpassung an eine Kontur einer augenseitigen Seite des teilreflektierenden Zirkularpolarisators gekrümmt ist;
Reflektieren eines zweiten Teils des ersten Teils des Bildlichts von einem Reflektor (103, 303, 403, 503, 603, 703, 810, 811) der HMD, wobei der Reflektor mindestens teilreflektierend ist, entlang der ersten Richtungsachse gekrümmt ist und entlang der ersten Richtungsachse rotationsasymmetrisch ist; und
Übertragen eines dritten Teils des Bildlichts, wobei der dritte Teil linear polarisiert wird, indem er durch den teilreflektierenden Zirkularpolarisator zu einem Benutzerauge (105) gelangt.

## Revendications

1. Dispositif optique comprenant :
un réflecteur (103, 303, 403, 503, 603, 703, 810, 811) étant incurvé le long d'un premier axe directionnel (106) et étant asymétrique en rotation le long du premier axe directionnel ;
un polariseur circulaire partiellement réfléchissant (104, 404, 604), destiné à sélectionner une lumière polarisée, positionné entre le réflecteur et une position attendue d'un premier œil d'utilisateur (105) et incurvé le long du premier axe directionnel ; et
un affichage électronique (302, 402, 502, 602, 702, 808), configuré pour fournir de la lumière au premier œil d'utilisateur, positionné sur un côté œil du polariseur circulaire partiellement réfléchissant et incurvé pour s'adapter à un contour du côté œil du polariseur circulaire partiellement réfléchissant.

2. Dispositif optique selon la revendication 1, dans lequel un axe optique du réflecteur est décalé par rapport à un axe optique du polariseur et/ou le réflecteur est partiellement réfléchissant.

3. Dispositif optique selon la revendication 1 ou 2, comprenant également :
un cadre (101) formé pour reposer contre une partie d'une structure anatomique d'un utilisateur, le cadre supportant l'affichage électronique, le polariseur et le réflecteur.

4. Dispositif optique selon la revendication 1, dans lequel
le réflecteur est incurvé le long d'un second axe directionnel (107) et est asymétrique en rotation le long du second axe directionnel ; ou
le polariseur circulaire partiellement réfléchissant est incurvé le long d'un second axe directionnel différent du premier axe directionnel ; ou
le réflecteur et le polariseur circulaire partiellement réfléchissant sont tous deux asymétriques en rotation le long du premier axe directionnel.

5. Dispositif optique selon l'une quelconque des revendications précédentes, dans lequel le polariseur circulaire partiellement réfléchissant réfléchit une polarisation circulaire orthogonale après une première réflexion d'énergie lumineuse à partir du réflecteur.

6. Dispositif optique selon la revendication 5, dans lequel le polariseur circulaire partiellement réfléchissant transmet une polarisation circulaire orthogonale après une seconde réflexion d'énergie lumineuse à partir du réflecteur.

7. Dispositif optique selon l'une quelconque des revendications précédentes, dans lequel l'affichage électronique (702, 808) est fabriqué avec et couplé au polariseur circulaire partiellement réfléchissant (704).

8. Dispositif optique selon l'une quelconque des revendications précédentes, dans lequel le polariseur circulaire partiellement réfléchissant comprend :
une lame quart d'onde, QWP (712) ;
une couche polarisante réfléchissante (713) ; et
un polariseur linéaire (714).

9. Dispositif optique selon la revendication 8, dans lequel le polariseur circulaire partiellement réfléchissant comprend également :
un substrat de support (711) constitué d'au moins l'un d'un verre ou d'un plastique ; et
un film antireflet (715).

10. Dispositif optique selon l'une quelconque des revendications précédentes, dans lequel
le réflecteur comprend :
un revêtement miroir sur la surface côté œil du réflecteur ; ou un revêtement antireflet sur une surface tournée vers le monde du réflecteur ;
et/ou
le réflecteur et le polariseur circulaire partiellement réfléchissant sont configurés pour se prolonger devant le premier œil d'utilisateur et un second œil d'utilisateur ;
et/ou
l'affichage électronique est un premier affichage électronique positionné pour fournir de la lumière au premier œil d'utilisateur (105) par réflexion à partir du réflecteur (810), le dispositif optique comprenant également un second affichage électronique positionné pour fournir de la lumière à un second œil d'utilisateur (806) par réflexion à partir d'un autre réflecteur (811).

11. Appareil visiocasque, HMD, comprenant un dispositif optique selon la revendication 1.

12. Appareil HMD selon la revendication 11, dans lequel le HMD comprend un filtre de polarisation au niveau d'une sortie du polariseur circulaire partiellement réfléchissant, dans lequel, éventuellement, le filtre de polarisation est stratifié directement sur l'écran, et dans lequel le filtre de polarisation comprend un polariseur linéaire (714). et un film retardateur quart d'onde.

13. Procédé de visualisation d'images avec un visiocasque, HMD, le procédé comprenant :
la fourniture d'une lumière d'image par un affichage électronique (302, 402, 502, 602, 702, 808) ;
la réflexion d'une première partie de la lumière d'image par un polariseur circulaire partiellement réfléchissant (104, 404, 604) du HMD, dans lequel le polariseur circulaire partiellement réfléchissant est incurvé le long du premier axe directionnel et l'affichage électronique est incurvé pour s'adapter à un contour d'un côté œil du polariseur circulaire partiellement réfléchissant ;
la réflexion d'une deuxième partie de la première partie de la lumière d'image à partir d'un réflecteur (103, 303, 403, 503, 603, 703, 810, 811) du HMD, le réflecteur étant au moins partiellement réfléchissant, étant incurvé le long du premier axe directionnel et étant asymétrique en rotation le long du premier axe directionnel ; et
la transmission d'une troisième partie de la lumière d'image, la troisième partie étant polarisée linéairement en passant à travers le polariseur circulaire partiellement réfléchissant jusqu'à un œil d'utilisateur (105).
